# EUROPEAN PATENT APPLICATION

(11) **EP 1 254 603 A2**
(43) Date of publication of application: **06.11.2002**
(21) Application number: 02009730.9
(22) Date of filing: 30.04.2002
(51) Int. Cl.: A23G 9/30

(54) **Method for the cleaning and washing in situ of the pressurized machines for the making of soft type ice creams**

(30) Priority: 04.05.2001 IT GE20010042
(71) Applicant: ALI S.p.A. - CARPIGIANI GROUP, 40011 Anzola Emilia (Bologna) (IT)
(72) Inventor: Cocchi, Gino, 40137 Bologna (IT)
(74) Representative: Porsia, Attilio, Dr.

(57) **Abstract**

Method for the cleaning and washing in situ of the soft type ice creams pressurized machines including the steps of: emptying of the ice cream contained in the machine freezing cylinder; removal of the liquid ice-cream mix container from the liquid ice-cream mix feeding circuit, and insertion into said circuit of a container containing water with a restrained lather light detergent dissolved in; starting up of the cleaning step, including a succession of water and detergent introductions into the freezing cylinder with steps of shaking and following openings of the ice cream extraction tap for the draining of the washing liquid; introduction of pressurized air into the cylinder for a few seconds in order to greatly reduce the amount of remaining water in the plant; repetition of the described cleaning operations for two or three more times; replacement of the container containing water and detergent with a container containing water and sanitizer; repetition of the described operations with water and sanitizer instead of water and detergent.

## Description

The present invention refers to the pressurized machines for the production of ice cream, such as for instance the machines of the type described in the Italian patent No. 1.157.616 by the same applicant. More particularly, the present invention refers to a method and a device for the periodical washing and the sanitization in situ of said machines.

According to one main characteristic, the method according to the invention includes the steps of:
a) Emptying of the ice cream contained in the freezing cylinder of the machine by using the compressed air employed for the pressurization of the liquid ice-cream mix to push the ice cream mass to the outside through the extraction tap, thus obtaining a very quick emptying of the ice cream;
b) Removal of the container of the liquid ice-cream mix from the liquid ice-cream mix feeding circuit, and introduction into said circuit of a container containing hot water at 45-55 °C with a restrained lather light detergent dissolved in;
c) Starting up of the cleaning step, including a succession of water and detergent introductions into the freezing cylinder with subsequent steps of shaking and following openings of the ice cream extraction tap in order to drain the washing liquid;
d) Introduction of pressurized air into the freezing cylinder for a few seconds in order to greatly reduce the amount of remaining water in the plant;
e) Repetition of the steps (c) and (d) for two or three more times;
f) Replacement of the container containing water and detergent with a container containing water and sanitizer;
g) Repetition of the steps (c) and (d) with water and sanitizer instead of water and detergent.

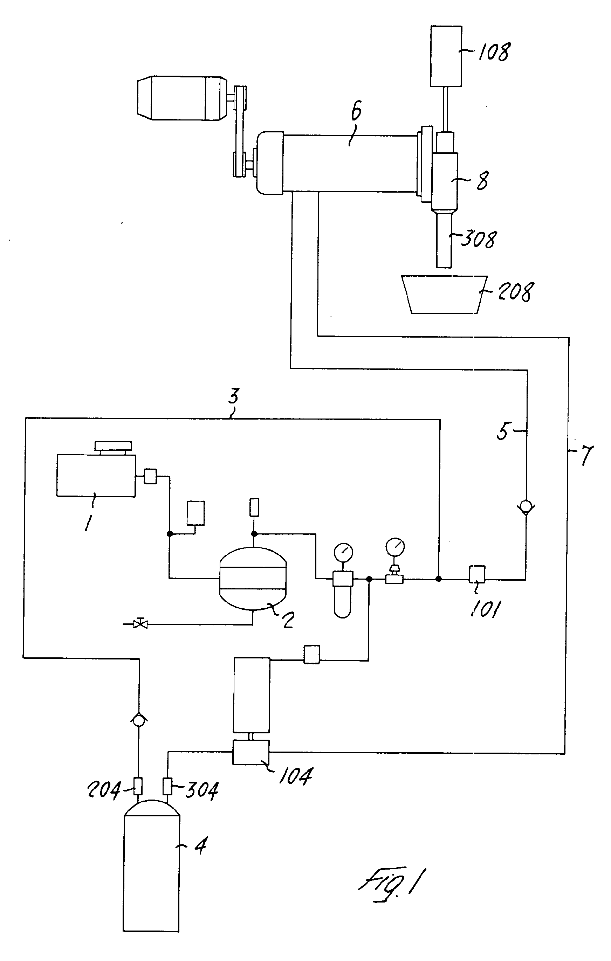

Further aims and advantages of the present invention will be better understood from the following description made with reference to the Figure 1 of the enclosed drawing, schematically showing the circuit of a pressurized machine for the production of ice cream.

With reference to the drawing, the machine shown includes, in a manner known by itself, an air compressor 1 feeding compressed air to the tank 2. From the tank 2 the compressed air is conveyed through the duct 3 to the tank 4 of the liquid ice-cream mix, and through the duct 5 to the freezing cylinder 6. At its turn, the liquid ice-cream mix is fed from the tank 4 through the duct 7 to the freezing cylinder 6. The ice cream made in the cylinder 6 is then extracted through the tap 8. For a detailed description of the operation of the shown machine, reference is made to the Italian patent no. 1.157.616 by the same applicant.

According to the present invention, whenever it is desired to perform the washing and sanitization of the described machine, one acts as follows.

1^{st} step: Emptying of the ice cream contained in the cylinder. This first step is preparatory to the washing operation. To this purpose, the actuator 108 of the extraction tap is operated by acting on a suitable control element (not shown), so as to switch said tap into opening position, and, at the same time, it is started up the mixer (not shown)contained in the freezing cylinder 6 and, while the valve 104 for the interception of the liquid ice-cream mix contained in the container 4 is maintained in its closed position, the solenoid valve 101 of the air is opened, therefore the air which is introduced through the duct 5 into the freezing cylinder 6 at a pressure of about 2 bar quickly pushes the ice cream mass contained in the freezing cylinder 6 to the outside through the tap 8. This step is very quick, in the range of a few ten seconds, and it is to be performed under the supervision of the operator, who has to provide for the recovering of the extracted ice cream.

2^{nd} step: Cleaning and washing operation. Once the first step is over, the preparation of the machine for the real washing step is started. To this purpose, (a) under the ice cream extraction tap 8 it is arranged a suitable liquid container 208, eventually connecting the tap 8 to the container 208 through a suitable pipe portion 308, and (b) the liquid ice-cream mix container 4 is disconnected from the pipes 3 and 7, by operating the suitable quick couplings 204, 304, and it is replaced with an identical container, containing hot water at 45-55 °C and a restrained lather light detergent. At this point, it is started a following whole series of supplying steps each one including the reopening of the valve 104, the introduction of compressed air into the container 4 through the duct 3, the starting up of the mixer within the freezing cylinder 2, and the opening of the tap 8, so that the washing liquid is fed from the container 4 through the duct 7 into the cylinder 6, and from this last it flows out through the tap 8 and is collected in the container 208. At the end of this washing step, the air valve 101 opens introducing for a few seconds into the freezing cylinder a pressurized air jet which in a few moments greatly reduces the water amount in the plant. This cycle is repeated more times, and preferably for four consecutive washing steps, using about eight liters of detergent liquid and a total washing time of less than ten minutes.

3^{rd} step: sanitization of the machine. This step is preceded by an introduction of air into the cylinder 6 more prolonged as to the preceding cycles, such as to allow an almost complete drying of the same. Then, the water and detergent container 4 is replaced by an analogous container 4 containing water and sanitizer. Finally it is started up the sanitization cycle. Said cycle includes the control for the closing of the tap 8 in order to allow the filling of the cylinder 6 with the sanitizing liquid and the following opening of said tap 8 with partial emptying of the cylinder 6, so to involve also the tap 8 in the sanitization action. Once the tap is closed again, the filling of the cylinder 6 is completed one more time, and the machine sets to standby. Normally it will remain in this mode for the whole night, until the resumption of the following day. After the opening of the tap 8 for the emptying of the sanitizer and a quick shaking step, the cycle ends with a long blowing of air pressurized achieving an almost total drying of the freezing cylinder, letting the machine ready for a new production cycle.

Of course, all the described steps are automatically controlled, after their starting up, from the control unit of the machine managed by a microcomputer, through the installation of a suitable work program.

Naturally, the present invention is not limited to the shown and described embodiment form, and then, for instance, in case the machine is prearranged to contemporaneously contain two containers 4, one will be filled with water and detergent and the other with water and sanitizer, thus it will be no longer necessary to replace the containers during the washing operation.

It will be also clear that, accordingly to the present invention through the production of a suitable software, without adding any electric, mechanic or pneumatic component within the machine, and with the only insertion of a draining pipe 308 connected between the tap 8 and the container 208, it is possible to perform one machine draining and washing cycle and one sterilizing and drying cycle.

It will be also evident the novelty provided with the present method, according to which the compressed air present in the machines of this kind is used both to accomplish the quick emptying of the ice cream from the freezing cylinder, and to accomplish a quick draining of the washing and sanitization waters, with contemporaneous quick drying of the involved elements.

Therefore, the present invention is not limited to the shown and described embodiment form, to be considered as a not limitative example of an embodiment form of the same.

## Claims

1. A method for the cleaning and washing in situ of the pressurized machines for the production of soft type ice creams **characterized in that** it includes the following steps:
a) Emptying of the ice cream contained in the freezing cylinder of the machine;
b) Removal of the liquid ice-cream mix container from the liquid ice-cream mix feeding circuit, and insertion into said circuit of a container containing hot water with a restrained lather light detergent dissolved in;
c) Starting up of the cleaning step, including a succession of water and detergent introductions into the freezing cylinder with steps of shaking and following openings of the ice cream extraction tap for the draining of the washing liquid;
d) Introduction of pressurized air into the freezing cylinder for a few seconds in order to greatly reduce the amount of remaining water in the plant;
e) Repetition of the steps (c) and (d) for two or three more times;
f) Replacement of the container containing water and detergent with a container containing water and sanitizer;
g) Repetition of the steps (c) and (d) with water and sanitizer instead of water and detergent.

2. A method according to claim 1, **characterized in that** for the quick draining of the ice cream from the freezing cylinder it is used compressed air to push the ice cream mass to the outside through the extraction tap.

3. A method according to claim 1, where the water containing the detergent is heated preferably to temperatures between 45 and 55°C.

4. A method according to any preceding claim, where the single operative steps are automatically controlled, after their starting up, by a suitable control unit managed by a microcomputer.
